# EUROPEAN PATENT SPECIFICATION

(11) **EP 4 140 604 B1**
(45) Date of publication and mention of the grant of the patent: **29.11.2023**
(21) Application number: 22185515.8
(22) Date of filing: 18.07.2022
(51) Int. Cl.: B07B 4/02, B07B 9/00, B07B 11/04, B07B 11/06, B07B 13/00

(54) **MACHINERY FOR DENSIMETRIC SEPARATION OF THE INERTS**
MASCHINEN ZUR DENSIMETRISCHEN TRENNUNG DER INERTSTOFFE
DISPOSITIF SÉPARATEUR DENSIMÉTRIQUE DES INERTES

(30) Priority: 26.08.2021 IT 202100022370
(43) Date of publication of application: 01.03.2023
(73) Proprietor: Cave Service SRL, 84014 Nocera Inferiore (SA) (IT)
(72) Inventor: OSIO, Felice, Nocera Inferiore (SA) (IT)
(74) Representative: Fiammenghi, Eva

(56) References cited:
- WO-A2-2004/012866
- DE-U1-202005 007 256
- US-A- 4 219 410
- US-A- 5 607 061

## Description

### Field of the invention

The present invention relates to the field of machines used in the treatment of materials to be recycled in order to recover significant fractions thereof, in particular it relates to machines that carry out a densimetric separation of the product. Even more specifically, the present invention describes a machine capable of separating all the light fractions present such as paper, plastic, any wood from the material to be recycled, such as inerts, glass, wood, ashes, completing the ecological recovery cycle of the product and making it quality and certifiable.

### Prior art

To date, construction waste, such as asphalt paving material excavated from road construction or that generated due to demolition work of concrete structures, is crushed with various crushers and recovered as recycled inerts, through vibrating sieves so that particles of size predetermined can be reused as a recycled composite material.

It is important to note that construction waste material contains not only a small amount of garbage such as wood and vinyl shavings: in fact, conventionally, from the recycled inert obtained from the crushing of construction waste material, firstly, the construction material waste is roughly removed by manual sorting or the like; after which, once subjected to the granulometry sieve with a vibrating sieve, it is possible to remove the remaining dust by suction with a suitable suction device or the like.

Furthermore, there are few machines on the market that separate the light fractions from the inerts and waste: there are some machines that exploit as a physical principle the suction of the light fractions directly from a vibrating surface as mentioned above; however, these is expensive machinery both in the initial investment and in the management costs, since it requires both considerable electrical power and a filter for the abatement of dust. This type of machinery also has the limit of not being able to process materials that contain fines as they would be suctioned with the light fractions.

Other examples, very bulky and equally expensive, which therefore do not make it possible to integrate the machine into pre-existing systems, are proposed by patent applications JP6406755B2 and KR101988351B1. The first patent claims a vibrating sieve which sifts the regenerated inert obtained by crushing the waste material according to the granulometry, and a suction nozzle which suctions and removes the mixed powder from the regenerated aggregate placed on the vibrating sieve meshes. Said invention also includes a dust reduction device for construction waste having a dust collector and a wind blower, installed in a suction duct downstream of the suction nozzle, in which the suction nozzle faces the downstream side of the mesh of the screen in the delivery direction of the aggregate, and is placed in the center of the suction duct.

The patent KR101988351B1 instead claims an air sorting unit to receive the main raw materials, scraps and residues which are relatively smaller than the predetermined size that falls from the selection unit; a brush for removing residues smaller than the predetermined size from the main raw material falling from the air sorting unit, where the sorting unit forms a space into which the main raw material, including the waste material, is fed; an inclined bottom housing having a first downwardly adjusted outlet; a first porous plate provided with holes of predetermined dimensions; a belt unit which rotates via two parallel pinch rollers, and includes a plurality of drive portions projecting outwardly to sweep the top surface of the first porous plate during rotation; a vibrating motor to vibrate the sorting chamber and favor the falling of small stones, scraps, residues and main raw materials on the lower surface of the sorting chamber through the first porous plate. The remaining stones and the remaining scraps thus obtained are relatively smaller than the predetermined size that falls from the air sorting unit and are shaken to perform specific separations through the physical principle of gravity. US5607061A discloses the preamble of claim 1.

The object of the present patent application is to overcome the aforementioned drawbacks by proposing an eco-sustainable machinery capable of separating waste from the material to be recycled with an innovative blowing system, thus completing the product recovery cycle and making it quality and certifiable. The proposed machinery can also be installed in existing fixed systems, on movable and semi-movable systems and independently as an independent movable unit and requires a minimum number of operators: the separation unit, once started, does not require operators during the operation but only the feeding of the base material and the disposal of the finished product. The proposed machinery can advantageously acquire data on the operating status by virtue of the support of IT tools provided with predictive and adaptable capacity, or capable of predicting malfunctions or machine downtime in advance and making decisions autonomously in order to prevent or limit such events.

### Description of the invention

According to the present invention, an eco-sustainable machinery is provided for separating all the light fractions present (such as paper, plastic, any wood, etc.) from the material to be recycled, completing the product recovery cycle and making it quality and certifiable through an innovative blowing system. The invention can be used for any kind of material to be recycled, such as:
- inert waste resulting from excavations or demolitions;
- glass to be recycled;
- street sweeping soil;
- foundry slag and other metallurgical processes;
- ashes from incinerators;
- wood to be recycled.

All the components of the present invention, guaranteeing the execution of different and multiple physical principles, are held together by a resistant and, advantageously, not bulky frame.

In the upper part of said frame a vibrating distributor is installed, which stratifies the material according to the density, i.e. the heavy material advances underneath the light material: by virtue of the advantageous combination of frequency and intensity of the vibrations, obtained by high frequency vibrators, the vibrating distributor makes the light fractions float on the heavy inert.

The vibrating distributor, moreover, also carries out the screening of the fine material present on the material, to avoid the phenomenon of dust emission when blowing, since the advancement plan consists of perforated sheets. Said perforated sheets are interchangeable, and can have a variable perforation according to the needs of the product. The vibrating distributor allows the product to be overturned, an indispensable factor for cleaning the light fractions from the heavy ones, since the **advancement plan in multiple scaled** sectors. The sheet placed in the lowest part of the advancement plane, or near the outlet of the vibrating distributor, can be replaced with an aligning sheet, which can be used when the material to be treated is not polyhedral but flat (for example glass), made with stainless steel or rubber strips with triangular section suitable for placing the single pieces side by side and aligning them before blowing, in order to expose the most favorable surface for the air diffuser.

The pneumatic separation of the product takes place at the outlet of the distributor using the innovative blowing system of the present invention, formed by an array of accelerating nozzles. Said array of nozzles distributes the previously pressurized air in the pressurizer, generating a uniform blade that crosses the material and the light fractions, accelerating the moving of the latter away from the product to be cleaned. The air flow, which feeds said array of nozzles, is generated by one or two electric aspirators and before reaching the accelerating nozzles it passes through a pressurizer which stabilizes the pressure thereof. In this way, the heavy fraction, now devoid of light fractions, falls into the appropriate conveyor, installed below the vibrating distributor and misaligned with respect to it so that the clean heavy fraction falls correctly on it; while the light fractions are pushed into the damping chamber both by the action of the array of nozzles and by a motorized roller, the latter installed near the outlet of the vibrating distributor and said damping chamber.

The incidence and the flow rate of the air blade can be adjusted by means of an adjustable lever and a frequency converter of the electric aspirators, respectively, so as to optimize the effectiveness of the present invention according to the client needs.

In one of the preferred embodiments, the machinery can be provided with a series of nebulizing nozzles, which by means of nebulized water jets avoid the emission of dust into the atmosphere. The motorized roller advantageously drives the light fractions towards the damping chamber and the subsequent dedicated conveyor; the motorized roller greatly expresses its effectiveness on oblong light fractions, which are raised by the air blade and dragged by the roller towards the outlet.

The damping chamber, installed in the immediate vicinity of the outlet of the vibrating distributor, on the one hand slows down the light fractions, which subsequently fall into the special purified conveyor, and on the other hand depressurizes the thrust air generated by the array of nozzles.

The damping chamber is shaped in such a way as to slow down the light fractions and eliminate the acceleration imparted by the air blade. In this way, the pressure returns to zero and the light fractions gently fall back into the designated conveyor. This chamber advantageously avoids the emission of air together with the light fractions.

The clean heavy fraction dropped onto the extractor belt is then ready to be recycled. Said extractor belt transports the clean heavy fraction fallen from the outlet of said dispenser to a collection point.

In one of the preferred embodiments, the invention provides for the installation, near said vibrating distributor, of a meter alternated at variable frequency. Said meter meters the material introduced on the dispenser not continuously but at intervals; the frequency of the discharges is variable by virtue of a torque converter. The discontinuous feeding produces a clean cut in the mass of the material to be treated, which facilitates the subsequent separation steps of the light fractions from the product, increasing the efficiency of the machinery.

In one of the preferred embodiments, the present invention can be implemented through a command and control panel with PLC programmable logic. Advantageously, said panel allows calibrating the following parameters:
- amplitude and frequency of distributor vibrations;
- vibrating plane drilling;
- incidence of the array of accelerating nozzles;
- air flow and speed;
- geometry and rotation speed of the drive roller.

The present invention is further capable of acquiring data on the operating status and of providing support by virtue of IT tools provided with predictive and adaptable capacity, or capable of predicting malfunctions or machine downtime in advance and making decisions autonomously in order to prevent or limit such events.

The machinery is provided with a system of internal cameras, preferably at the outlet of said vibrating distributor, at said conveyor and inside said damping chamber. Said camera system advantageously allows acquiring smoother images on the functioning of the components and thanks to slow motion it helps the technicians in optimizing the adjustment parameters of the machinery. Said camera system is programmed in such a way as to recognize any anomalies of said components and/or any anomalous machine blockage, and being connected to a system board, it stops the machinery itself, which through a special speaker emits an alarm signal.

The internal camera system can be integrated by additional sensors and network cameras engaged in the area where the machinery is installed and connected to said system board. Said network cameras suitable for monitoring the operation of said machinery, even in areas where the vision of the plant for the operator is difficult or where local conditions prevent him/her from staying in the vicinity of the machine.

The images acquired by said internal camera system and said network cameras can be viewed on a display panel installed on the machinery and/or from a remote location: in this case the operator can react more quickly to a cause of failure, such as a piece that is stuck in the machine, and is able to take the appropriate tool to solve the fault already on the way to the machine.

Said system card advantageously allows remote connectivity of the machinery, via wired, wireless, Ethernet or Bluetooth connection, allowing the collected data to be brought together on a remote server in the cloud and/or on the local server of the company where said machinery is installed. Moreover, said system board monitors the time of use of said machinery.

The data collected by said system sheet advantageously allows configuring specific analysis and forecasting algorithms aimed at increasing safety and reducing machine downtime: for example, on the basis of the data coming from all the machines sold in the world, predicting which piece is worn out and replacing it before major damage is caused to the machinery, thus avoiding a longer interruption of work and therefore more costly in terms of loss of productivity.

The system board also allows for the installation of software, which can also be read and accessed through special web or mobile applications, adapted to translate data into intuitive and understandable information for all users. Said software, being connected to the warehouse management server, allows automatically responding to the maintenance technician and/or operator as regards the stock and availability of the spare part.

The machinery according to the present patent application separates the light fractions from the product with an efficiency ranging from 90% to 100%; moreover, it can be produced in such a way as to have a variable treatment capacity between 25 and 150 tons/h.

The present invention can be advantageously installed in existing fixed systems, on movable, semi-movable systems and independently as a separate movable unit.

This machinery allows obtaining a maximum production capacity with a minimum demand for operators; in fact, once started, it does not require operators during operation but only the feeding of the base material and the disposal of the finished product.

### Description of the figures

The invention will hereinafter be described in at least a preferred embodiment thereof by way of non-limiting example with the aid of the accompanying figures, in which:
- FIGURE 1 shows a side view section of a machinery for densimetric separation of the inerts 100 according to an embodiment of the present patent application;
- FIGURE 2 illustrates a three-dimensional view of a machinery for densimetric separation of the inerts 100 according to an embodiment of the present patent application.

### Detailed description of the invention

The present invention will now be described purely by way of non-limiting or binding example with the aid of the figures, which illustrate some embodiments relative to the present inventive concept.

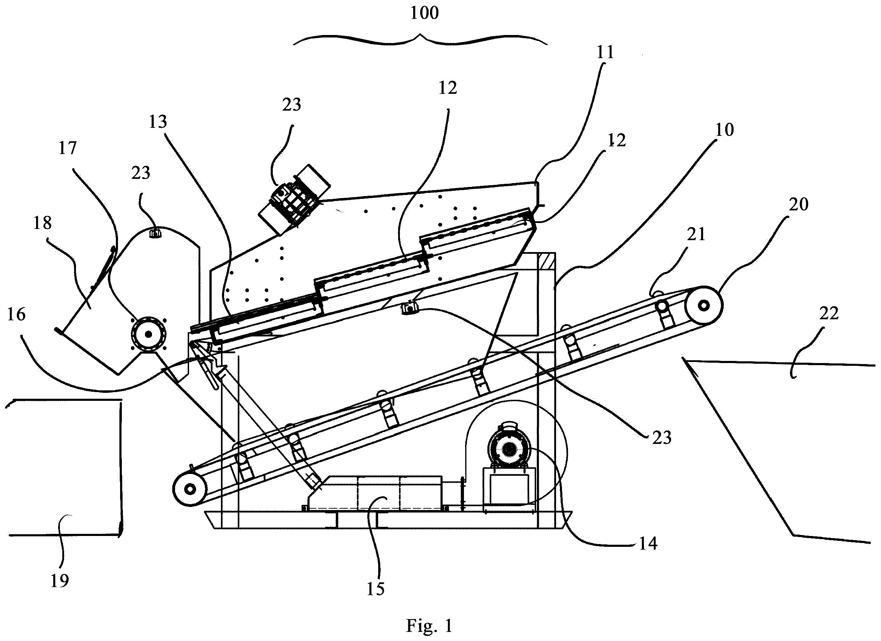

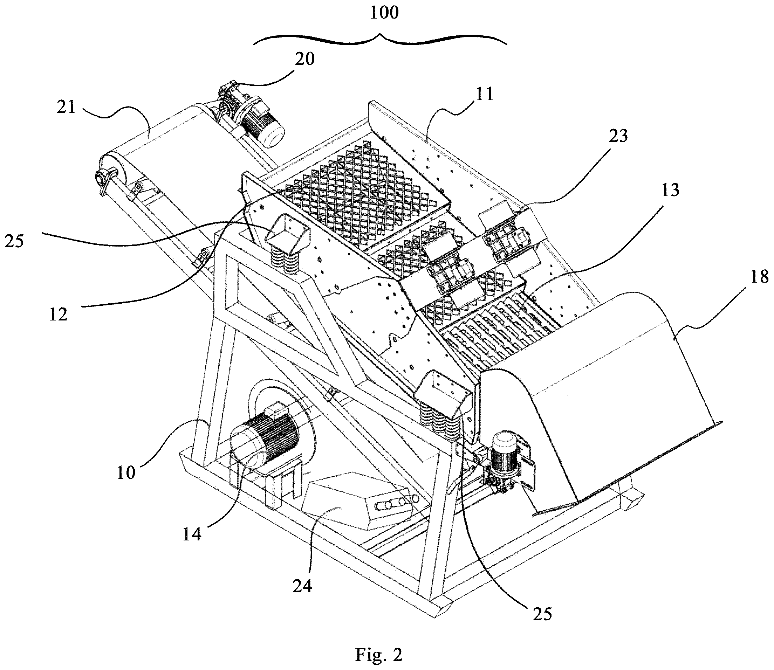

With reference to FIGS. 1 and 2, the main components of a machinery for densimetric separation of the inerts 100 is shown. In particular, FIG. 1 shows a sectional view of the components, mainly the internal ones, of the present invention when collection boxes 19-22 are used; FIG. 2 shows a three-dimensional view of the invention of the present patent application.

Said machinery for the densimetric separation of the inerts 100 consisting of a resistant and not very bulky frame 10 adapted to maintain firm and protect all the components. In the upper part of said frame 10, a vibrating distributor 11 is installed, adapted to receive the dirty material to be recycled and adapted to stratify the material according to the density. Said advancement plane 12 consists of perforated sheets which allow the screening of the fine material present on the material, preventing the phenomenon of powder emission at the subsequent blowing; said perforated sheets are interchangeable, and can have a variable perforation according to the product needs. The vibrating distributor 11 allows the product to be overturned, an indispensable factor for cleaning the light fractions from the heavy ones, since the advancement plan 12 is distributed in multiple scaled sectors. The plate placed in the lowest part of the advancement plane, i.e. near the outlet of the vibrating distributor, can be replaced with an aligning plate 13.

In the lower part of said frame 10 two electric aspirators 14 are respectively installed, feeding an array of nozzles 16, and a pressurizer 15, connected to said electric aspirators 14 and to said array of nozzles 16, adapted to stabilize the air pressure before it is distributed by said array 16.

Said array of nozzles 16, installed at the outlet of said vibrating distributor 11 (i.e. at the lowest end)distributes the previously pressurized air into the pressurizer 15, generating a uniform blade that crosses the material and the light fractions, accelerating the moving of the latter away from the product to be cleaned.

In the immediate vicinity of said electric aspirators 14, a control panel 24 is installed that is adapted to turn on and off said machinery for the densimetric separation of the inerts 100 to allow adjusting the incidence and the flow rate of the air blade so as to optimize the effectiveness of the present invention according to the customer's needs.

At this point, a motorized roller 17, installed at the outlet of said vibrating distributor 11 and within the damping chamber 18, operates the driving of the light fractions towards said damping chamber 18 and the next box 19.

Said damping chamber 18, installed in the immediate vicinity of the outlet of the vibrating distributor 11, on the one hand slows down the light fractions, which subsequently fall into the special box 19, and on the other hand depressurizes the thrust air generated by said array of nozzles 16.

Said damping chamber 18 is shaped in such a way as to slow down the light fractions and reset the acceleration imparted by the air blade: in this way, the pressure returns to zero and the light fractions gently fall back into the appropriate conveyor and/or into said box 19.

At the same time, the clean heavy fraction falls on the conveyor 20 and is thus ready to be recycled. Said machinery for densimetric separation of the inerts 100 is also provided with a system of internal cameras 23, engaged in the upper part of said vibrating distributor 11, near said conveyor 20 and inside said damping chamber 18. Said camera system 23 on the one hand acquires images on the functioning of the components, on the other hand, being programmed in such a way as to recognize any malfunctions of said components and/or any anomalous machine blockage and being connected to a system board (not shown in FIGS. 1 and 2), stop said machinery for the densimetric separation of the inerts 100, which through a suitable speaker 26 emits an alarm signal. Said system board and said speakers 26 are installed near said control panel 24.

Finally, it is clear that modifications, additions or variants may be made to the invention described thus far which are apparent to those skilled in the art, without departing from the scope of protection that is provided by the appended claims.

## Claims

1. Machinery for densimetric separation (100) adapted to separate, from the recyclable material, all the light fractions present, completing the product recovery cycle and rendering it a quality and certifiable product; said machinery for densimetric separation (100) comprising:
- a resistant frame (10) that is not very bulky, adapted to maintain firm and protect all the components;
- at least a vibrating distributor (11), installed in the upper part of said frame (10) adapted to receive the material to be recycled and adapted to stratify said material based on the density; said vibrating distributor (11) being formed by said advancement plane (12) distributed into multiple graduated sectors and constituted by perforated plates, adapted to turn over the material and allow the screening of the fine material present on the material, preventing the phenomenon of powder emission at the subsequent blowing;
- at least an electric aspirator (14), installed in the lower part of said frame (10) adapted to supply an array of nozzles (16);
- at least a pressurizer (15), connected to said electric aspirator (14) and to said array of nozzles (16), adapted to stabilize the pressure of the air before it is distributed by said array of nozzles (16);
- at least one said array of nozzles (16), installed at the outlet of said vibrating distributor (11), adapted to distribute the previously-pressurized air in said pressurizer (15), generating a uniform blade that crosses the material and the light fractions, accelerating the moving of the latter away from the product to be cleaned;
- at least a control panel (24), installed in the lower part of said frame (10) adapted to turn on and off said machinery for densimetric separation (100); said control panel (24) being adapted to allow adjusting the incidence and the flow rate of the air blade so as to optimize the effectiveness of said machinery for densimetric separation (100) based on the client needs;
- at least one damping chamber (18), installed in the immediate vicinity of the outlet of said vibrating distributor (11), adapted to slow the light fractions pushed by said array of nozzles (16); said damping chamber (18) being adapted to depressurize the thrust air generated by said array of nozzles (16); said damping chamber (18) being shaped in a manner such to slow the light fractions and cancel the acceleration imparted by the air blade, by canceling the pressure returns to zero and the light fractions are made to fall at a collection point;
- at least a conveyor belt adapted to correctly receive the clean heavy fraction; adapted to transport the clean heavy fraction that fell from the unloading of said vibrating distributor (11) towards a collection point (22); **characterized in that** at least a motorized roller (17), installed at the outlet of said vibrating distributor (11) and within said damping chamber (18), adapted to operate the driving of the fractions towards said damping chamber (18);
- at least a system board, installed in said control panel (24), adapted to collect data on the operation of the components; said system board being adapted to remotely connect said machinery for densimetric separation of the inerts (100), allowing the merging of the data collected on a remote cloud server and/or on a local server of the client's company; said system board being adapted to monitor the use time of said machinery;
- a video camera system (23), installable at the components, adapted to acquire images regarding the operation of the components; said video camera system (23) being programmed in a manner such to recognize possible malfunctions of said components and/or of a possible machine block irregularity and being connected to a system board, adapted to stop said machinery for densimetric separation (100);
- at least a speaker (26) adapted to emit an alarm signal in case of machine stoppage.

2. Machinery for densimetric separation (100), according to the preceding claim 1, **characterized in that** it is installable in existing fixed plants, on movable, semi-movable plants and independently as a movable group on its own.

3. Machinery for densimetric separation (100), according to the preceding claims 1 and 2, **characterized in that** it requires operators only for the feeding of the base material and the disposal of the finished product.

4. Machinery for densimetric separation (100), according to any one of the preceding claims, **characterized in that** it separates the light fractions from the product with an efficiency that varies from 90% to 100% and has a treatment capacity variable between 25 and 150 ton/h.

5. Machinery for densimetric separation (100), according to any one of the preceding claims, **characterized in that** said perforated plates of said vibrating distributor (11) are interchangeable and have a perforation that is variable based on the product requirements.

6. Machinery for densimetric separation (100), according to any one of the preceding claims, **characterized in that** the last plate, at the outlet of said vibrating distributor (11), can be substituted with an aligning plate (13) usable when the material to be treated has substantially flat form; said aligning plate (13) being attained with stainless steel listels with triangular section adapted to flank and align the single pieces before blowing, so as to expose the most favorable surface to said array of nozzles (16).

7. Machinery for densimetric separation of the inserts (100), according to any one of the preceding claims, **characterized in that** it provides for the installation, at said vibrating distributor (11), of a meter alternated at variable frequency; said meter being adapted to meter the material introduced on said vibrating distributor (11) at intervals, producing a clear cut in the mass of the material to be treated and increasing the efficiency of said machinery for densimetric separation (100).

8. Machinery for densimetric separation (100), according to any one of the preceding claims, **characterized in that** it comprises a command and control panel with PLC programmable logic; said board allowing calibrating the amplitude and frequency parameters of the vibrations of said vibrating distributor (11); advancing plane perforation; incidence of said array of nozzles (16); air flow rate and speed; geometry and speed of rotation of said motorized roller (17).

9. Machinery for densimetric separation (100), according to any one of the preceding claims, **characterized in that** said internal video camera system (23) comprises further sensors and network video cameras, connected to said system board, engaged in the area where the machinery for densimetric separation (100) is installed; said network video cameras being adapted to monitor the operation of said machinery for densimetric separation (100), also in areas where the operator's viewing of the plant is difficult or where the local conditions prevent moving in the vicinity of the machine.

10. Machinery for densimetric separation (100), according to the preceding claim 1 **characterized in that** the images acquired by said internal video camera system (23) and said network video cameras can be viewed on a display panel engaged on the machinery for densimetric separation (100) and/or from a remote position.

11. Machinery for densimetric separation (100), according to any one of the preceding claims, **characterized in that** said system board allows the installation of a software, readable and accessible also through suitable web or mobile applications, adapted to translate the data into information that is intuitive and comprehensible for all the users; said software, being connected with the warehouse management server, allows automatically replying to the maintenance technician and/or operator regarding the storage and availability of the replacement.

12. Machinery for densimetric separation (100), according to any one of the preceding claims, **characterized in that** said system board allows, with the collected data, to configure suitable analysis and forecast algorithms adapted to increase the safety and to reduce the machine stop times.

## Patentansprüche

1. Maschinerie zur densimetrischen Trennung (100), die dazu angepasst ist, von dem recycelbaren Material alle vorhandenen leichten Fraktionen zu trennen, um den Zyklus der Produktrückgewinnung zu vervollständigen und daraus ein Qualitäts- und zertifizierbares Produkt zu machen; wobei die Maschinerie zur densimetrischen Trennung (100) aufweist:
- einen widerstandsfähigen, wenig sperrigen Rahmen (10), der dazu angepasst ist, alle Komponenten fest zu halten und zu schützen;
- zumindest einen vibrierenden Verteiler (11), der im oberen Teil des Rahmens (10) installiert und dazu angepasst ist, das zu recycelnde Material aufzunehmen und dazu angepasst ist, das Material basierend auf der Dichte zu schichten; wobei der vibrierende Verteiler (11) durch die Förderebene (12) gebildet wird, die in mehrere abgestufte Sektoren aufgeteilt ist und durch perforierte Platten gebildet wird, die dazu angepasst sind, das Material umzudrehen und das Sieben des auf dem Material vorhandenen Feinmaterials zu ermöglichen, wodurch das Phänomen der Pulveremission beim nachfolgenden Blasen verhindert wird;
- zumindest ein elektrischer Sauger (14), der im unteren Teil des Rahmens (10) installiert und dazu angepasst ist, eine Anordnung von Düsen (16) zu versorgen;
- zumindest einen Druckhalter (15), der mit dem elektrischen Sauger (14) und der Anordnung von Düsen (16) verbunden und dazu angepasst ist, den Druck der Luft zu stabilisieren, bevor sie durch die Anordnung von Düsen (16) verteilt wird;
- zumindest eine der Anordnung von Düsen (16), die am Ausgang des vibrierenden Verteilers (11) installiert und dazu angepasst ist, die zuvor unter Druck gesetzte Luft in dem Druckhalter (15) zu verteilen, wobei eine gleichförmige Klinge erzeugt wird, die das Material und die leichten Fraktionen durchquert und die Bewegung der letzteren weg von dem zu reinigenden Produkt beschleunigt;
- zumindest ein im unteren Teil des Rahmens (10) installiertes Steuerungspanel (24), das dazu angepasst ist, die Maschinerie zur densimetrischen Trennung (100) ein- und auszuschalten; wobei das Steuerungspanel (24) dazu angepasst ist, ein Einstellen des Einfalls und der Durchflussrate der Luftklinge zu ermöglichen, um die Wirksamkeit der Maschinerie zur densimetrischen Trennung (100) basierend auf den Bedürfnissen des Kunden zu optimieren;
- zumindest eine Dämpfungskammer (18), die in der unmittelbaren Nähe des Auslasses des vibrierenden Verteilers (11) installiert und dazu angepasst ist, die von der Anordnung von Düsen (16) geschobenen leichten Fraktionen zu verlangsamen; wobei die Dämpfungskammer (18) dazu angepasst ist, die durch die Anordnung von Düsen (16) erzeugte Schubluft drucklos zu machen; wobei die Dämpfungskammer (18) auf eine Weise geformt ist, dass sie die leichten Fraktionen verlangsamt und die durch die Luftklinge ausgeübte Beschleunigung aufhebt, wobei durch das Aufheben der Druck auf Null zurückkehrt und die leichten Fraktionen dazu gebracht werden, auf einen Sammelpunkt zu fallen;
- zumindest ein Förderband, das dazu angepasst ist, die saubere schwere Fraktion korrekt aufzunehmen; das dazu angepasst ist, die saubere schwere Fraktion, die von dem Entladen des vibrierenden Verteilers (11) gefallen ist, zu einem Sammelpunkt (22) zu transportieren; **dadurch gekennzeichnet, dass** zumindest eine motorisierte Walze (17), die am Auslass des vibrierenden Verteilers (11) und innerhalb der Dämpfungskammer (18) installiert ist, dazu angepasst ist, das Antreiben der Fraktionen in Richtung der Dämpfungskammer (18) zu betreiben;
- zumindest eine Systemplatine, die in dem Steuerungspanel (24) installiert und dazu angepasst ist, Daten über den Betrieb der Komponenten zu sammeln; wobei die Systemplatine dazu angepasst ist, die Maschinerie zur densimetrischen Trennung der Inertstoffe (100) aus der Ferne zu verbinden, was das Zusammenführen der gesammelten Daten auf einem entfernten Cloud-Server und/oder auf einem lokalen Server des Unternehmens des Kunden ermöglicht; wobei die Systemplatine dazu angepasst ist, die Verwendungszeit der Maschinerie zu überwachen;
- ein Videokamerasystem (23), das an den Komponenten installiert werden kann und dazu angepasst ist, Bilder bezüglich des Betriebs der Komponenten zu erfassen; wobei das Videokamerasystem (23) so programmiert ist, dass es mögliche Fehlfunktionen der Komponenten und/oder eine mögliche Unregelmäßigkeit des Maschinenblocks erkennt, und mit einer Systemplatine verbunden ist, die dazu angepasst ist, die Maschinerie für die densimetrische Separierung (100) anzuhalten;
- zumindest einen Lautsprecher (26), der dazu angepasst ist, im Fall eines Maschinenstopps ein Alarmsignal abzugeben.

2. Maschinerie zur densimetrischen Trennung (100) gemäß dem vorhergehenden Anspruch 1, **dadurch gekennzeichnet, dass** sie in bestehenden festen Anlagen, auf beweglichen, halbbeweglichen Anlagen und unabhängig als eine eigene bewegliche Gruppe installierbar ist.

3. Maschinerie zur densimetrischen Trennung (100) nach den vorhergehenden Ansprüchen 1 und 2, **dadurch gekennzeichnet, dass** sie Bediener nur zum Zuführen des Basismaterials und die Beseitigung des fertigen Produkts benötigt.

4. Maschinerie zur densimetrischen Trennung (100) nach einem der vorhergehenden Ansprüche, **dadurch gekennzeichnet, dass** sie die leichten Fraktionen mit einem Wirkungsgrad, der von 90 % bis 100 % variiert, von dem Produkt trennt und eine veränderliche Behandlungskapazität zwischen 25 und 150 t/h aufweist.

5. Maschinerie zur densimetrischen Trennung (100) nach einem der vorhergehenden Ansprüche, **dadurch gekennzeichnet, dass** die perforierten Platten des vibrierenden Verteilers (11) austauschbar sind und eine Perforation aufweisen, die basierend auf den Produktanforderungen variabel ist.

6. Maschinerie zur densimetrischen Trennung (100) nach einem der vorhergehenden Ansprüche, **dadurch gekennzeichnet, dass** die letzte Platte am Auslass des vibrierenden Verteilers (11) durch eine Ausrichtplatte (13) ersetzt werden kann, die verwendet werden kann, wenn das zu behandelnde Material eine im Wesentlichen flache Form aufweist; wobei die Ausrichtplatte (13) mit Leisten aus rostfreiem Stahl mit dreieckigem Querschnitt versehen ist, die dazu angepasst sind, die einzelnen Stücke vor dem Blasen zu flankieren und auszurichten, um der Anordnung der Düsen (16) die günstigste Oberfläche zu zeigen.

7. Maschinerie zur densimetrischen Trennung der Einsätze (100) nach einem der vorhergehenden Ansprüche, **dadurch gekennzeichnet, dass** sie die Installation eines Messgeräts, das mit variabler Frequenz wechselt, an dem vibrierenden Verteiler (11) vorsieht; wobei das Messgerät dazu angepasst ist, das auf den vibrierenden Verteiler (11) eingeführte Material in Intervallen zu messen, was einen klaren Schnitt in der Masse des zu behandelnden Materials erzeugt und die Effizienz der Maschinerie zur densimetrischen Trennung (100) erhöht.

8. Maschinerie zur densimetrischen Trennung (100) nach einem der vorhergehenden Ansprüche, **dadurch gekennzeichnet, dass** sie ein Befehls- und Steuerungspanel mit programmierbarer SPS-Logik aufweist, wobei die Platine das Kalibrieren der Amplituden- und Frequenzparameter der Vibrationen des vibrierenden Verteilers (11); die Perforation in der fördernden Ebene; des Einfalls der Anordnung von Düsen (16); der Durchflussrate und der Geschwindigkeit der Luft; der Geometrie und der Drehgeschwindigkeit der motorisierten Walze (17) ermöglicht.

9. Maschinerie zur densimetrischen Trennung (100) nach einem der vorhergehenden Ansprüche, **dadurch gekennzeichnet, dass** das interne Videokamerasystem (23) weitere Sensoren und Netzwerk-Videokameras aufweist, die mit der Systemplatine verbunden sind und in dem Bereich eingesetzt werden, in dem die Maschinerie zum densimetrischen Separieren (100) installiert ist; wobei die Netzwerk-Videokameras dazu angepasst sind, den Betrieb der Maschinerie zur densimetrischen Trennung (100) auch in Bereichen zu überwachen, in denen die Sicht des Bedieners auf die Anlage schwierig ist oder in denen die örtlichen Bedingungen eine Bewegung in der Nähe der Maschine verhindern.

10. Maschinerie zur densimetrischen Trennung (100) nach dem vorhergehenden Anspruch 1, **dadurch gekennzeichnet, dass** die durch das interne Videokamerasystem (23) und die Netzwerk-Videokameras erfassten Bilder auf einem Display-Panel, das an der Maschine zur densimetrischen Trennung (100) angekoppelt ist, und/oder von einer entfernten Position aus betrachtet werden können.

11. Maschinerie zur densimetrischen Trennung (100) nach einem der vorhergehenden Ansprüche, **dadurch gekennzeichnet, dass** die Systemplatine die Installation einer Software ermöglicht, die auch über geeignete Web- oder Mobilanwendungen lesbar und zugänglich ist und dazu angepasst ist, die Daten in Informationen zu übersetzen, die für alle Nutzer intuitiv und verständlich sind; wobei die Software, die mit dem Lagerverwaltungsserver verbunden ist, es ermöglicht, dem Wartungstechniker und/oder dem Bediener automatisch eine Antwort bezüglich der Lagerhaltung und der Verfügbarkeit des Ersatzes zu geben.

12. Maschinerie zur densimetrischen Trennung (100) nach einem der vorhergehenden Ansprüche, **dadurch gekennzeichnet, dass** die Systemplatine es erlaubt, mit den gesammelten Daten geeignete Analyse- und Prognosealgorithmen zu gestalten, die dazu angepasst sind, die Sicherheit zu erhöhen und die Maschinenstoppzeiten zu verringern.

## Revendications

1. Dispositif pour la séparation densimétrique (100) adapté pour séparer, du matériau recyclable, toutes les fractions légères présentes, achevant le cycle de récupération du produit et en faisant un produit de qualité et certifiable ; ledit dispositif pour la séparation densimétrique (100) comprenant
- un cadre résistant (10) qui n'est pas très encombrant, adapté pour maintenir fermement et protéger tous les composants ;
- au moins un distributeur vibrant (11), installé dans la partie supérieure dudit cadre (10) adapté pour recevoir le matériau à recycler et adapté pour stratifier ledit matériau sur la base de la densité ; ledit distributeur vibrant (11) étant formé par ledit plan d'avance (12) distribué dans de multiples secteurs gradués et constitué de plaques perforées, adaptées pour retourner le matériau et permettre le criblage du matériau fin présent sur le matériau, empêchant le phénomène d'émission de poudre lors du soufflage ultérieur ;
- au moins un aspirateur électrique (14), installé dans la partie inférieure dudit cadre (10) adapté pour fournir un agencement de buses (16) ;
- au moins un pressuriseur (15), relié audit aspirateur électrique (14) et audit agencement de buses (16), adapté pour stabiliser la pression de l'air avant qu'il ne soit distribué par ledit agencement de buses (16) ;
- au moins un dit agencement de buses (16), installé à la sortie dudit distributeur vibrant (11), adapté pour distribuer l'air pressurisé précédemment dans ledit pressuriseur (15), générant une lame uniforme qui traverse le matériau et les fractions légères, accélérant le déplacement de ces dernières loin du produit à nettoyer ;
- au moins un panneau de commande (24), installé dans la partie inférieure dudit cadre (10) adapté pour mettre en et hors service ledit dispositif pour la séparation densimétrique (100) ; ledit panneau de commande (24) étant adapté pour permettre l'ajustement de l'incidence et du débit de la lame d'air de sorte à optimiser l'efficacité dudit dispositif pour la séparation densimétrique (100) sur la base des besoins du client ;
- au moins une chambre d'amortissement (18), installée à proximité immédiate de la sortie dudit distributeur vibrant (11), adaptée pour ralentir les fractions légères poussées par ledit agencement de buses (16) ; ladite chambre d'amortissement (18) étant adaptée pour dépressuriser l'air de poussée généré par ledit agencement de buses (16) ; ladite chambre d'amortissement (18) étant formée d'une manière à ralentir les fractions légères et annuler l'accélération transmise par la lame d'air, par l'annulation la pression revient à zéro et les fractions légères sont amenées à tomber en un point de collecte ;
- au moins une sangle de transport adaptée pour recevoir correctement la fraction lourde propre ; adaptée pour transporter la fraction lourde propre qui tombe du déchargement dudit distributeur vibrant (11) vers un point de collecte (22) ; **caractérisé par** au moins un rouleau motorisé (17), installé à la sortie dudit distributeur vibrant (11) et dans ladite chambre d'amortissement (18), adapté pour actionner l'entraînement des fractions vers ladite chambre d'amortissement (18) ;
- au moins une carte mère, installée dans ledit panneau de commande (24), adaptée pour collecter des données sur le fonctionnement des composants ; ladite carte mère étant adaptée pour relier de manière distante ledit dispositif pour la séparation densimétrique de matières inertes (100), permettant la fusion des données collectées sur un serveur cloud distant et/ou sur un serveur local de la société du client ; ladite carte mère étant adaptée pour surveiller le temps d'utilisation dudit dispositif ;
- un système de caméra vidéo (23), installable au niveau des composants, adapté pour acquérir des images concernant le fonctionnement des composants ; ledit système de caméra vidéo (23) étant programmé d'une manière à reconnaître des dysfonctionnements possibles desdits composants et/ou d'une irrégularité de bloc machine possible et étant relié à une carte mère, adaptée pour arrêter ledit dispositif pour la séparation densimétrique (100) ;
- au moins un haut-parleur (26) adapté pour émettre un signal d'alarme en cas d'arrêt de la machine.

2. Dispositif pour la séparation densimétrique (100) selon la revendication 1 précédente,
**caractérisé en ce qu'**il est installable dans des usines fixes existantes, sur des usines mobiles ou semi-mobiles et indépendamment comme un groupe mobile seul.

3. Dispositif pour la séparation densimétrique (100) selon les revendications 1 et 2 précédentes,
**caractérisé en ce qu'**il requiert des opérateurs seulement pour l'alimentation du matériau de base et l'évacuation du produit fini.

4. Dispositif pour la séparation densimétrique (100) selon l'une des revendications précédentes,
**caractérisé en ce qu'**il sépare les fractions légères du produit avec une efficacité qui varie de 90 % à 100 % et présente une capacité de traitement variable entre 25 et 150 tonnes/h.

5. Dispositif pour la séparation densimétrique (100) selon l'une des revendications précédentes,
**caractérisé en ce que** lesdites plaques perforées dudit distributeur vibrant (11) sont interchangeables et présentent une perforation qui est variable sur la base des exigences du produit.

6. Dispositif pour la séparation densimétrique (100) selon l'une des revendications précédentes,
**caractérisé en ce que** la dernière plaque, à la sortie dudit distributeur vibrant (11), peut être substituée par une plaque d'alignement (13) utilisable lorsque le matériau à traiter présente une forme sensiblement plate ; ladite plaque d'alignement (13) étant atteinte avec des listels en acier inoxydable avec une section triangulaire adaptée pour flanquer et aligner les seules pièces avant le soufflage de sorte à exposer la surface la plus favorable audit agencement de buses (16).

7. Dispositif pour la séparation densimétrique des matières inertes (100) selon l'une des revendications précédentes, **caractérisé en ce qu'**il assure l'installation, sur ledit distributeur vibrant (11), d'un compteur alterné à fréquence variable ; ledit compteur étant adapté pour compter le matériau introduit sur ledit distributeur vibrant (11) à des intervalles, produisant une découpe claire dans la masse du matériau à traiter et augmentant l'efficacité dudit dispositif pour la séparation densimétrique (100).

8. Dispositif pour la séparation densimétrique (100) selon l'une des revendications précédentes,
**caractérisé en ce qu'**il comprend un panneau de commande et de contrôle avec une logique programmable PLC ; ladite carte permettant l'étalonnage des paramètres d'amplitude et de fréquence des vibrations dudit distributeur vibrant (11) ; la perforation du plan d'avance ; l'incidence dudit agencement de buses (16) ; le débit et la vitesse d'air ; la géométrie et la vitesse de rotation dudit rouleau motorisé (17).

9. Dispositif pour la séparation densimétrique (100) selon l'une des revendications précédentes,
**caractérisé en ce que** ledit système de caméra vidéo interne (23) comprend d'autres capteurs et caméras vidéo de réseau, reliés à ladite carte mère, engagés dans la zone où le dispositif pour la séparation densimétrique (100) est installé ; lesdites caméras vidéo de réseau étant adaptées pour surveiller le fonctionnement dudit dispositif pour la séparation densimétrique (100), aussi dans des zones où la visualisation de l'opérateur de l'usine est difficile ou où les conditions locales empêchent le déplacement à proximité de la machine.

10. Dispositif pour la séparation densimétrique (100) selon la revendication 1 précédente,
**caractérisé en ce que** les images acquises par ledit système de caméra vidéo interne (23) et lesdites caméras vidéo de réseau peuvent être visualisées sur un panneau d'affichage engagé sur le dispositif pour la séparation densitométrique (100) et/ou depuis une position distante.

11. Dispositif pour la séparation densimétrique (100) selon l'une des revendications précédentes,
**caractérisé en ce que** ladite carte mère permet l'installation d'un logiciel, lisible et accessible aussi à travers des applications Web ou mobiles appropriées, adaptées pour traduire les données en informations qui sont intuitives et compréhensibles pour tous les utilisateurs ; ledit logiciel étant relié au serveur de gestion d'entrepôt, permet la réponse automatique au technicien et/ou à l'opérateur de maintenance concernant le stockage et la disponibilité du remplacement.

12. Dispositif pour la séparation densimétrique (100) selon l'une des revendications précédentes,
**caractérisé en ce que** ladite carte mère permet, avec les données collectées, de configurer des algorithmes de prévision et d'analyse appropriés adaptés pour augmenter la sécurité et pour réduire les temps d'arrêt machine.
